# EUROPEAN PATENT APPLICATION

(11) **EP 2 369 241 A1**
(43) Date of publication of application: **28.09.2011**
(21) Application number: 11380012.2
(22) Date of filing: 28.02.2011
(51) Int. Cl.: F24C 15/32, A21B 3/04

(54) **Air heating and dehumidifying equipment for bread and pastry ovens**

(30) Priority: 22.03.2010 ES 201000368
(71) Applicant: Dobra Industrial, SA, 08339 Vilassar de Dalt, Barcelona (ES)
(72) Inventor: Brasero Sanchez, Domingo, 08339 vilassar de dalt(Barcelona) (ES)
(74) Representative: Torner Lasalle, Elisabet

(57) **Abstract**

The invention relates to heating and dehumidifying equipment for bread and pastry ovens, comprising a heating enclosure (4) on one side of the oven (1), the enclosure (4) housing two heating resistor (6) and fan (7) assemblies communicating with the oven through openings (9) and side openings (30), an outlet (11) for the steam generated by the oven; and a conduit (12) evacuating said steam to the outside. A bulb (16) detecting the temperature reached in said heating enclosure and oven has been provided between two resistor and fan assemblies which are separated by a partition wall (14), dividing the heating enclosure into two parts (5a, 5b), and the bulb (16) is installed in said partition wall (14) in a vertical slot (18), thus uniformly participating in the temperature of said two parts (5a, 5b).

## Description

### Technical Field

The present invention generally relates to air heating and dehumidifying equipment, and more specifically to air heating and dehumidifying equipment intended for an oven for preparing bread and pastry by forced heated air circulation, with a very uniform regulation, at all times, of the temperature of the recirculated heated air.

### Prior Art

Apparatuses or equipment intended for heating and dehumidifying the air of a bread and pastry oven are already known. Particularly, ovens for baking bread and pastry comprising a heating enclosure housing heating means and air circulation means arranged for creating a hot air convection current around the pieces of bread or pastry to be baked inside said baking chamber are known. The heating means typically comprise heating resistors and the air circulation means generally include two centrifugal fans driven by electric motors. In a standard arrangement, the oven includes two heating resistors in the form of a helical coil arranged next to one another, surrounding the blade wheels of two respective centrifugal fans, so that the air suctioned axially through the blade wheels into the enclosure is radially propelled through the heating resistors, exiting the heating enclosure at respective sides. The heating enclosure housing the two resistor and fan units is arranged next to a side or rear wall of the baking chamber and separated therefrom by a panel with inlet openings facing the blade wheels of the fans and side outlets where the heated air propelled under pressure from said enclosure circulates.

The blade wheels of the fans are typically driven by respective electric motors in connection with a controlled reversing device for reversing the rotational direction of the fans approximately every 3 minutes (although this number is only for guidance), and the mentioned heating enclosure defines forced air steering conduits associated with the centrifugal fans to perform a substantially symmetrical circulation distribution of the heated air inside the baking chamber and around the pieces of bread or pastry while baking. The heating enclosure usually includes an outlet opening in connection with a chimney to facilitate the evacuation of the steam given off by the bread while baking, and other gaseous materials. Said outlet is usually located in an upper zone next to one of the blade wheels in the same side or rear wall of the chamber where the heating means and the air circulation means are installed.

Patent application EP 09380108 belonging to the present applicant describes an oven with the features herein explained.

Patents US 5937740 and ES 2135031 describe similar heating and dehumidifying equipment applicable to ovens for preparing bread or pastry.

In the oven of patent application EP 09380108, the mentioned air outlet has an opening in the upper wall of the heating enclosure and is associated with an arrangement of deflector elements providing at least one inclined wall sloping downwardly from a position adjacent to said outlet opening and towards the periphery of said fan, determining, together with the upper wall, a funnel configuration which restricts the flow of the air cast by the fan and strongly propels it towards the outlet opening to capture and extract steam generated in the chamber.

### Disclosure of the invention

Although the heating and dehumidifying equipment of EP 09380108 works satisfactorily, when such assembly incorporates two heating units (resistor-fan) it lacks means for being able to very precisely control at all times the temperature of the air cast into the oven itself from the mentioned heating enclosure, so that said temperature is suitable. The present invention relates to air heating and dehumidifying equipment for bread and pastry ovens of the type described above, which has the advantage of being able to control the temperature of the air reached by effect of the heating resistors in the heating enclosure comprising the mentioned fans.

The heating and dehumidifying equipment for bread and pastry ovens object of the invention comprises: a heating enclosure attached to a side or rear wall of said oven and communicating with the latter by means of openings in a front face and through its two sides; two heating resistor and fan assemblies rotating alternately in opposite directions, each fan facing the mentioned opening; an upper outlet for the steam generated by that chamber of the oven; and a conduit working as a chimney, evacuating said steam to the outside. The fact that a bulb detecting the temperature reached in said heating enclosure is incorporated in the mentioned heating enclosure housing the two resistor and fan assemblies is characteristic of the present heating and dehumidifying equipment.

According to a preferred embodiment of the invention, the mentioned bulb is incorporated between two consecutive resistor and fan assemblies which are separated by an intermediate partition wall dividing the heating enclosure into two parts containing a corresponding resistor and fan assembly, the mentioned bulb being installed in said intermediate partition wall. According to a preferred embodiment, the mentioned bulb is installed in an advantageously vertical slot of said intermediate partition wall, thus uniformly participating in the temperature of said two adjacent parts of the mentioned heating enclosure, so that the air propelled by the two ends of the heating enclosure could be regulated so that it always has a uniform temperature.

These and other features will be seen in reference to the drawings described below.

### Brief Description of the Drawings

In order to better understand the proposed invention, sheets of drawings are attached as non-limiting examples, in which:
Figure 1 depicts a perspective view of an oven for bread and pastry incorporating the equipment object of the invention, for heating and dehumidifying the air of said oven;
Figure 2 also illustrates a perspective view of the inside of the mentioned air heating and dehumidifying equipment of the oven; and
Figure 3 is a plan view of the heating enclosure illustrating the arrangement of the bulb detecting the temperature in relation to the heating and air propelling elements.

### Detailed Description of a Preferred Embodiment of the Invention

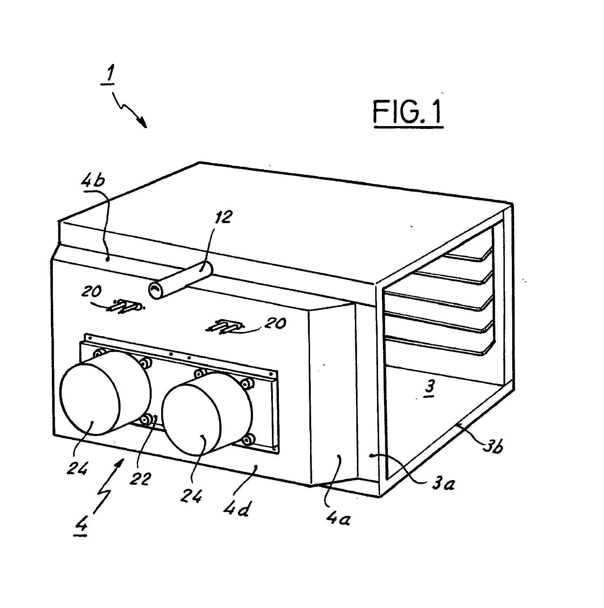

According to said Figure 1, an oven 1 for bread and pastry can be seen, consisting of a chamber 3 (which is drawn without the oven door) where the mentioned pieces of bread and pastry are arranged, and a heating enclosure 4 formed by side walls 4a, an upper wall 4b and a lower wall 4c, a rear wall 4d and a front wall 4e which is placed and tight against a side or rear wall 3a of said chamber 3 of the oven, said chamber being open on one side 3b.

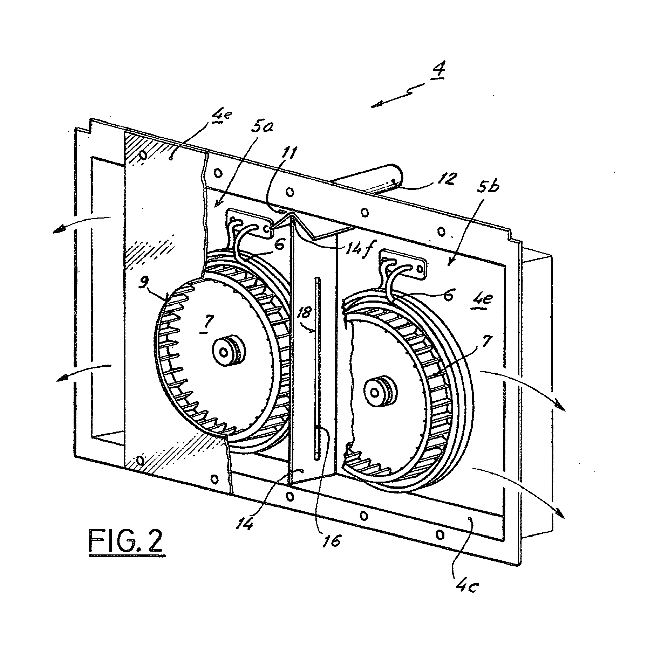

In the mentioned heating enclosure 4 (Figure 2), two heating resistor 6 and fan 7 assemblies are installed, each fan communicating with the baking chamber 3 of the oven by means of at least one circular opening 9. The heating enclosure 4 further has side openings 30 for propelling hot air, there also being an upper outlet 11 for the steam generated by that chamber 3 and a conduit 12 working as a chimney, evacuating it to the outside.

Said Figure 2 depicts two resistor 6 and fan 7 assemblies separated by a central and vertical partition wall 14 dividing the heating enclosure 4 into two sections 5a, 5b and the upper portion of said partition wall ends in an arrow point 14f which drives the mentioned steam to the mentioned conduit 12 (this evacuation corresponding to the teaching of the mentioned patent application EP 09380108).

It should be pointed out that in the present invention, a bulb 16 detecting the temperature, which will be conveniently connected to a power switch of the resistors 6 (the conventional connection of which is not illustrated so as to not overload the drawing) has been added in the heating enclosure 4 in order to be able to control the temperature of said heating enclosure 4 and respective baking chamber 3 of the oven 1.

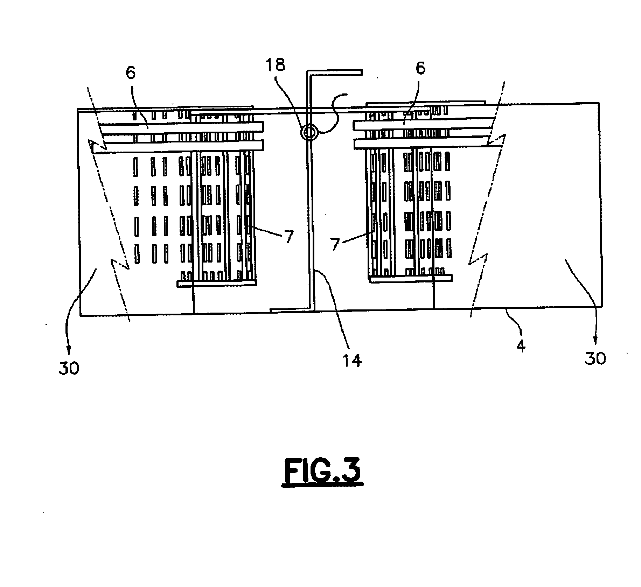

In the illustrated example, and providing the heating enclosure 4 with a central partition wall 14 between both resistor 6 and fan 7 assemblies, the mentioned bulb 16 will be installed in said central partition wall 14, and it will more advantageously be installed in a vertical slot 18 of that partition wall 14; the mentioned bulb 16 thus simultaneously participates in and detects the temperature of both parts 5a, 5b of the mentioned heating enclosure 4. It can be seen in Figure 3 that the bulb 16 is located at the bottom of the heating enclosure, in a zone close to the resistors 6, in order to more effectively sense the temperature thereof.

Terminals 20 for the electrical connection of said resistors 6, as well as a plate 22 holding the motors 24 driving the fans 7, can be seen in the rear wall 4d of said heating enclosure (Figure 1).

A person skilled in the art could introduce changes and modifications in the described embodiments, without departing from the scope of the invention as it is defined in the attached claims.

## Claims

1. Heating and dehumidifying equipment for bread and pastry ovens, comprising:
- a heating enclosure (4) next to a wall (3a) of the baking chamber (3) of said oven (1) and communicating with the latter through front openings (9) and side openings (30);
- two adjacent heating resistor (6) and fan (7) assemblies, located inside said heating enclosure (4), the fan (7) of each assembly facing a respective air intake opening (9);
**characterized in that** a thermostat bulb (16) detecting the temperature reached in said heating enclosure (4) and oven (1) is incorporated in the mentioned heating enclosure (4) housing the two heating resistor (6) and fan (7) assemblies, which bulb is incorporated in an intermediate zone between the two adjacent resistor (6) and fan (7) assemblies.

2. The equipment according to claim 1, **characterized in that** said two adjacent resistor (6) and fan (7) assemblies are separated by an intermediate partition wall (14) dividing the heating enclosure (4) into two parts (5a, 5b), the mentioned bulb (16) being installed in an opening of said intermediate partition wall (14).

3. The equipment according to claim 2, **characterized in that** the mentioned bulb (16) is installed in a vertical slot (18) of said intermediate partition wall (14), participating in the temperature of said two parts (5a, 5b) of the mentioned heating enclosure (4).

4. The equipment according to claim 3, **characterized in that** the mentioned bulb (16) is located next to the bottom of the heating enclosure, adjacent to the zone occupied by the resistors, which have an annular configuration surrounding blade rotors of fans (7).

5. The equipment according to claim 1, **characterized in that** the enclosure (4) further comprises an upper outlet (11) for the steam generated by the baking chamber (3) of the oven (1) and a conduit (12) working as a chimney, evacuating said steam to the outside.
